# EUROPÄISCHE PATENTSCHRIFT

(11) **EP 0 633 006 B1**
(45) Veröffentlichungstag und Bekanntmachung des Hinweises auf die Patenterteilung: **08.10.1997**
(21) Anmeldenummer: 94106362.0
(22) Anmeldetag: 08.08.1991
(51) Int. Cl.: A61C 11/00, A61C 19/045

(54) **Gesichtsbogen mit Bissgabelsäule und Artikulator-Adapter**
Face bow with mouthpiece column and articulator adaptor
Arc facial à tige munie d'une fourchette buccale et adapteur pour articulateur

(30) Priorität: 08.08.1990 DE 4025121
(43) Veröffentlichungstag der Anmeldung: 11.01.1995
(62) Teilanmeldung aus: 91914579.7
(73) Patentinhaber: POLZ, Michael Heinz, 8650 Kindberg (AT)
(72) Erfinder: POLZ, Michael Heinz, 8650 Kindberg (AT)
(74) Vertreter: Matschkur, Götz, Lindner Patent- und Rechtsanwälte

(56) Entgegenhaltungen:
- FR-A- 2 430 761
- US-A- 3 866 323
- US-A- 4 639 220

## Beschreibung

Die Erfindung betrifft einen Gesichtsbogen zur Übertragung und Montage eines Kiefermodells in räumlich schädelgerechter Orientierung in einen Kiefer-Artikulator, mit einem das Gesicht umgebenden Transfer-Bügel und einer daran lösbar befestigten Führungssäule zum Tragen einer verstellbaren Bißgabel; die Endbereiche des Transfer-Bügels sind mit Taster zum Lokalisieren der Kiefergelenk-Scharnierachse versehen, um an deren Referenzpunkte den Transferbügel anzulegen.

Derartige Geräte, zum Teil auch mit den nachfolgend angeschnittenen Merkmalen, sind auf dem Gebiet der Zahnmedizintechnik bekannt (vgl. W. Hoffmann-Axthelm "Lexikon der Zahnmedizin" Quintessenz-Verlags GmbH Berlin, 1983; "Einführung in die Zahnersatzkunde" Verlag Urban und Schwarzenberg, 1975; US-A-3 200 497):

Der Kiefer-Artikulator dient zur Simulation von Kiefergelenkbewegungen mit eingesetzten Zahn- und Kiefermodellen, wobei er die Bewegung der Kiefer zueinander in mehr oder weniger großer Vollkommenheit außerhalb des Mundes nachzuahmen gestattet (vgl. auch WO 92/02192).

Um individuelle Patientenwerte (zum Beispiel Bennet-Winkel, Intercondylarabstand usw.) am Artikulator einstellen zu können, müssen sie als individuelles Registrat am Patienten gemessen werden. Dies kann für die sagittale Kondylenneigung und den Bennet-Winkel zum Beispiel mit Gesichtsbögen geschehen (extraorale Registrierung). Zur intraoralen Bestimmung der sagittalen Kondylenbahnneigung läßt man den Patienten in protrudierter (nach vorne bewegter) Stellung in ein Wachsregistrat auf einer Bißgabel einbeißen. In dieser Stellung befinden sich die Kondylen in einer Position, welche typisch ist für die jeweilige individuelle Gelenkbahnneigung. Bringt man nun dieses Wachsregitrat zwischen die Zahnreihen von Zahnersatz-Kiefermodellen, welche in einem Artikulator mit verstellbarer Kondylenbahnneigung fixiert sind, und setzt man die Kiefermodelle exakt in das Wachsregistrat ein, so führen die Gelenke des Artikulators Bewegungen aus, die den individuellen Kiefergelenkbewegungen des jeweiligen Patienten im wesentlichen entsprechen. Mithin kann das Gelenk des Artikulators so nach der individuellen Gelenkbahnneigung des Patienten justiert werden.

Um bei einem Patienten die Scharnierachsen-Referenzpunkte einfach handhabbar und ohne Belastung für den Patienten exakt nach dessen individuellen Schädelverhältnissen lokalisieren zu können, sind bei einem Gesichtsbogen mit den eingangs genannten Merkmalen die Taster in Richtung der Scharnierachse beweg- und feststellbar ausgeführt.

Um den Transfer-Bügel des Gesichtbogens bezüglich der Median- bzw. Sagittalebene des menschlichen Kiefers symmetrisch positionieren zu können, sind in weiterer Ausbildung die Taster als Träger von Codemarkierungen ausgebildet, die bezüglich einer quer zur Scharnierachse verlaufenden Mittelebene bzw. der Kiefer-Medianebene auf dem jeweiligen Träger symmetrisch angeordnet sind; dabei sind die Träger in Richtung der Scharnierachse an einer Ablesemarkierung vorbeibewegbar, die auf dem Bügel ortsfest angebracht ist. In konkreter Realisierung dieses Gedankens sind die Taster als Bolzen oder Stifte ausgeführt, die die Bügelenden in Richtung der Scharnierachse hin- und herbewegbar durchsetzen und farbig codierte Vertiefungen und/oder Erhöhungen in Form von umlaufenden Ringen aufweisen, die die symmetrische Codemarkierung bilden.

Es ist zweckmäßig, den Gesichtsbogen mit den einleitend genannten Merkmalen mit einem Stütz-Vorsprung zu versehen, der in einem mittleren Abschnitt des Transfer-Bügels positioniert und zur Anlage an der Glabella (unbehaarte Stelle zwischen den Augenbrauen) ausgebildet ist. Mit besonderem Vorteil ist der Vorsprung beweglich geführt, nämlich in Richtung zur Glabella und/oder schräg oder senkrecht zur vom Bügel aufgespannten Ebene und in dem Patienten entsprechender Position feststellbar. Als Feststellmittel können eine oder mehrere Rändelschrauben dienen. Damit wird die Orientierung des Transfer-Bügels bezüglich der Glabella auf einen nicht exakten Durchschnittswert vermieden.

Sind die Glabella-Stütze und die weiter oben erläuterten Scharnierachsen-Taster entsprechend den individuellen Verhältnissen beim Patienten dreidimensional beispielsweise mittels Rändelschrauben fixiert, stellt sich nach dem Herausnehmen der Bißgabel das Problem des Transports: Die Bißgabel mit ihrer Führungs/Tragsäule muß ins Labor geliefert und dort am Artikulator in einer dreidimensionalen Orientierung montiert werden, die den geometrischen Verhältnissen des individuellen Patientenschädels möglichst genau entspricht. Hierzu ist es bekannt, vom Unterkiefer-Teil des Artikulators den Stützstift-Teller zu entfernen und stattdessen die Führungs/Tragsäule mit der Bißgabel zu fixieren. Dabei können fehlerhafte Abweichungen bis zu acht Millimeter entstehen. Dies kann vor allem auf winkelmäßig ungenaues Ausrichten der Bißgabel-Stellung gegenüber der Kiefer-Medianebene beruhen, indem beispielsweise die Führungs/Tragsäule mit der daran befestigten Bißgabel nicht in der schädelgerechten Drehstellung in das Artikulator-Unterkieferteil eingesteckt und/oder daran montiert wird.

Mithin ergibt sich das der Erfindung zugrundeliegende Problem, einen Gesichtsbogen zu schaffen, der bei leichter Handhabung eine sichere und bezüglich der individuellen Schädelverhältnisse exakte Übertragung der Bißgabel-Winkelstellung gegenüber der Medianebene in den Artikulator ermöglicht. Zur Lösung wird bei einem Gesichtbogen, der eine am Transfer-Bügel lösbar befestigte Führungssäule zum Tragen einer verstellbaren Bißgabel aufweist, erfindungsgemäß vorgeschlagen, daß der Bügel an seiner Ober- oder Unterseite eine längliche Zentriervertiefung, und die Führungssäule einen Justiervorsprung aufweisen, der zum formschlüssigen Einrücken in die Zentriervertiefung ausgebildet ist.

Wenn die am Bügel ortsfeste Zentriervertiefung in Eingriff kommt mit dem an der Führungssäule ortsfesten Justiervorsprung, ist eine Verdrehung der Führungssäule samt der daran in dreimensional schädelgerechter Orientierung fixierten Bißgabel praktisch unterbunden. Wird die Bißgabel gegenüber der Führungssäule nicht verstellt, kann diese über ihren Justiervorsprung in eine entsprechende Zentriervertiefung am Artikulator wieder in eine Stellung gebracht werden, die weitgehend den Raumverhältnissen entspricht, wie sie am individuellen Patientenschädel mittels der Bißgabel und/oder der oben erläuterten Scharnierachsen-Taster registriert und fixiert worden sind.

Mit Vorteil ist der Justiervorsprung als von der Führungssäule senkrecht vorspringender Dorn und/oder die Zentriervertiefung als im Querschnitt V-förmige Nut ausgeführt. Durch diese Querschnittsform wird der Dorn in den Bereich der mittleren Längsebene der Nut bis zu deren Boden/Scheitel geführt, wo er praktisch unverdrehbar festgelegt ist.

Die genaue Justierung gegenüber dem Schädel des Patienten fördert es, wenn die Zentriervertiefung etwa senkrecht zur Kiefer-Frontalebene und/oder Kiefergelenk-Scharnierachse verläuft. Entsprechendes gilt, wenn die Zentriervertiefung etwa in Richtung der Kiefer-Medianebene verläuft und/oder in der mittleren Querebene des Transferbügels liegt.

Um die erläuterte Führungssäule mit einer Bißgabel, auf der sich ein individuelles Wachsregistrat des Patienten befindet, in einer den mit dem Gesichtsbogen vermessenen Werten entsprechenden Drehstellung in den Artikulator montieren zu können, wird für diesen erfindungsgemäß ein Adapter vorgeschlagen, der eine Zentriervertiefung zur formschlüssigen Aufnahme des erläuterten Justiervorsprungs der Führungssäule aufweist. Hierdurch wird die Sicherheit und Genauigkeit bei der Handhabung des Artikulators beträchtlich erhöht.

In weiterer Ausgestaltung ist der erfindungsgemäße Artikulator-Adapter mit einer Bohrung versehen, die zum Einschieben und Feststellen (beispielsweise mittels Rändelschrauben) der Führungssäule der Bißgabel ausgebildet ist; dabei ist bezüglich der Bohrung die Zentriervertiefung radial oder senkrecht verlaufend angeordnet. So kann beim Einschieben der Führungssäule deren Justiervorsprung als Begrenzungsanschlag für die Einschiebtiefe dienen.

Um Einsatzmöglichkeiten des erfindungsgemäßen Adapters auch für bereits bekannte und auf dem Markt erhältliche Artikulatoren zu schaffen, ist nach einer weiteren Ausbildung der Adapter als am Ober- oder Unterteil des Artikulators lösbar befestigbares Teil ausgeführt. Vor allem bei Montage des Adapters am Artikulator-Oberteil ergibt sich eine geschlossene, obere Einheit, die dem vom Patienten abgenommenen Modell mit Gesichtsbogen und Bißgabel entspricht. Die miteinander fluchtenden Scharnierachsen-Taster/-Zeiger des Gesichtsbogens, die die reale Kiefer-Scharnierachse des Patienten lokalisiert haben, vermitteln die Reproduktion der Oberkiefer-Schädel- einheit des individuellen Patienten identisch im Artikulator-Oberteil. Dadurch kann eine schädelgerechte Einorientierung des Oberkiefers auf dem Artikulator vorgenommen werden.

Weitere Einzelheiten, Merkmale und Vorteile auf der Basis der Erfindung ergeben sich aus der nachfolgenden Beschreibung eines bevorzugten Ausführungsbeispiels der Erfindung sowie anhand der Zeichnungen. Diese zeigen in
- Fig. 1: eine perspektivische Darstellung des Artikulators;
- Fig. 2: eine Seitenansicht des Artikulators;
- Fig. 3: eine Rückansicht des Artikulators;
- Fig. 4: eine perspektivische Darstellung des erfindungsgemäßen Gesichtsbogens mit vertikaler Führungssäule und daran montierter Bißgabel;
- Fig. 5: eine Draufsicht auf die Unterseite des mittl eren Abschnitts des Gesichtsbogens mit Zentriervertiefung und darin befindlichem Justiervorsprung;
- Fig. 6: eine perspektivische Darstellung des OberkieferArtikulatorteils mit daran befestigtem Adapter;
- Fig. 7: eine Draufsicht auf die Unterseite des Adapt ers mit Zentriervertiefung und darin befindlichem Justiervorsprung.

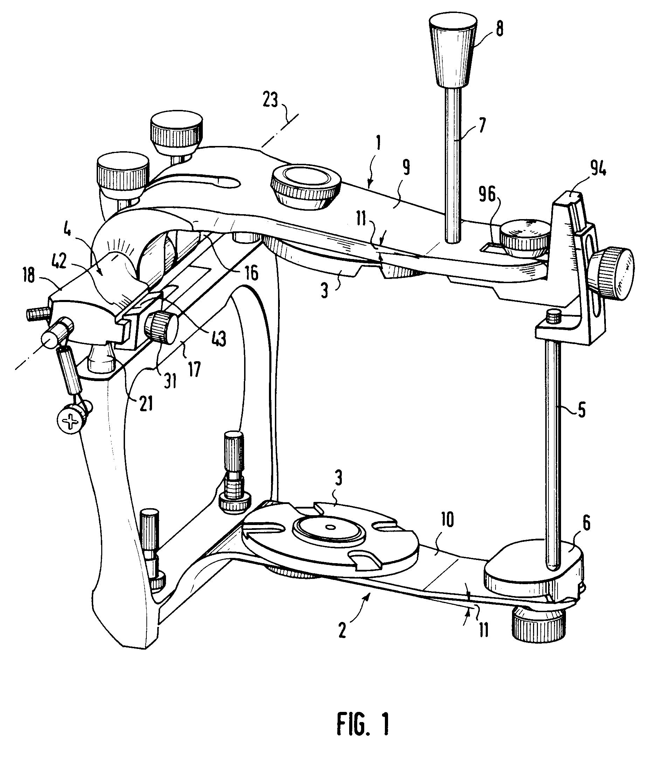

Zur Ausführung der Erfindung dient gemäß Fig. 1 - 3 ein Artikulator mit einem Oberteil 1 und einem daran angelenkten Unterteil 2, die jeweils zum Tragen eines Oberkiefer- bzw. Unterkiefer-Modells mittels unterseitig angeordneten Tragtellern 3 ausgebildet sind. Ober- und Unterteil 1, 2 sind über Gelenke 4 gegeneinander verschwenkbar und linear bewegbar verbunden. Ein am Oberteil 1 montierter Stützstift 5 erstreckt sich nach unten zu einem am Unterteil 2 montierten Stützstift-Führungsteller 6 und steht dort mit seinem Ende auf, um die Bißhöhe zu fixieren. Eine am Oberteil 1 nach oben ragende Handhabe 7 mit Handgriff 8 ermöglicht es, zur Nachahmung von Bewegungen des Kiefergelenkes dem Oberteil 1 relativ zum Unterteil 2 Schwenk- und Linearbewegungen 22 zu erteilen, die durch die Gelenke 4 vermittelt werden. Derartige Artikulatoren sind an sich bekannt, und wegen weiterer Einzelheiten wird auf die Fachliteratur verwiesen.

Es verlaufen Oberteil- bzw. Unterteil-Mittelabschnitte 9, 10, an denen die Tragteller 3 angeschraubt sind, mit ihren jeweiligen Ober- und Unterseiten in einem Neigungswinkel 11 von 10°. Hierdurch wird in dorsaler Richtung 12 zu den Gelenken 4 gesehen ein Ansteigen der Oberteil- bzw. Unterteil-Mittelabschnitte 9, 10 nach oben bewirkt.

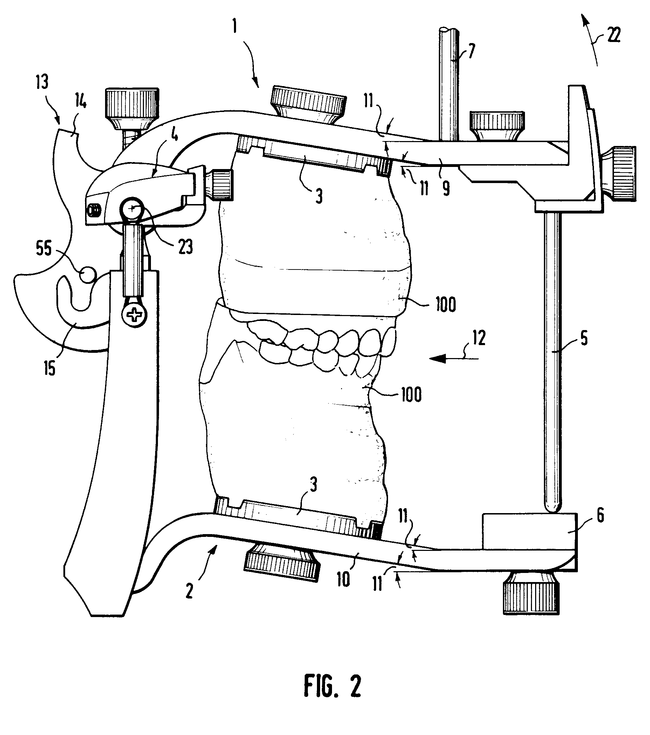

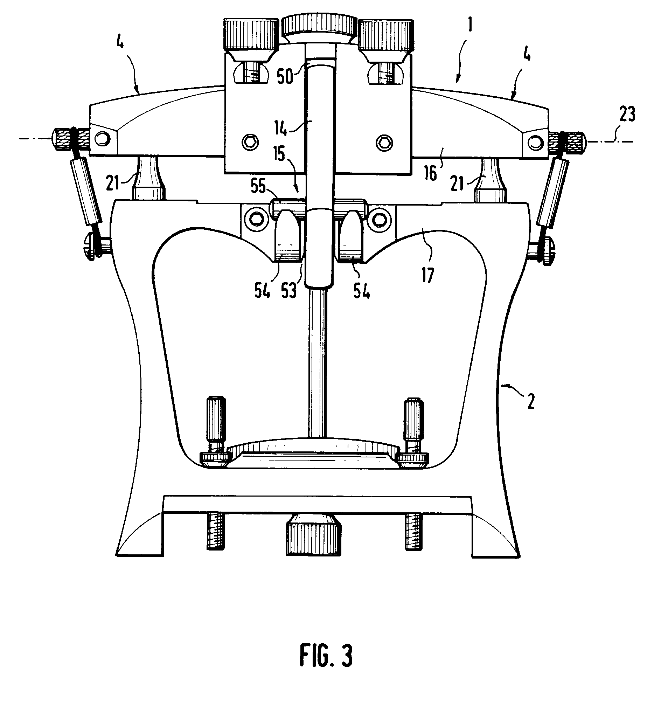

Wie insbesondere aus Fig. 2 und 3 ersichtlich, ist der Artikulator erfindungsgemäß mit einer Zentrikverriegelung 13 versehen, die an der Artikulator-Rückseite zwischen den Gelenken 4 angeordnet ist und aus zwei am Ober- und Unterteil 1, 2 angebrachten Sperrelementen 14, 15 besteht. Diese sind etwa in der Mitte der rückseitigen Querstege 16 bzw. 17 von Ober- und Unterteil 1, 2 angeordnet.

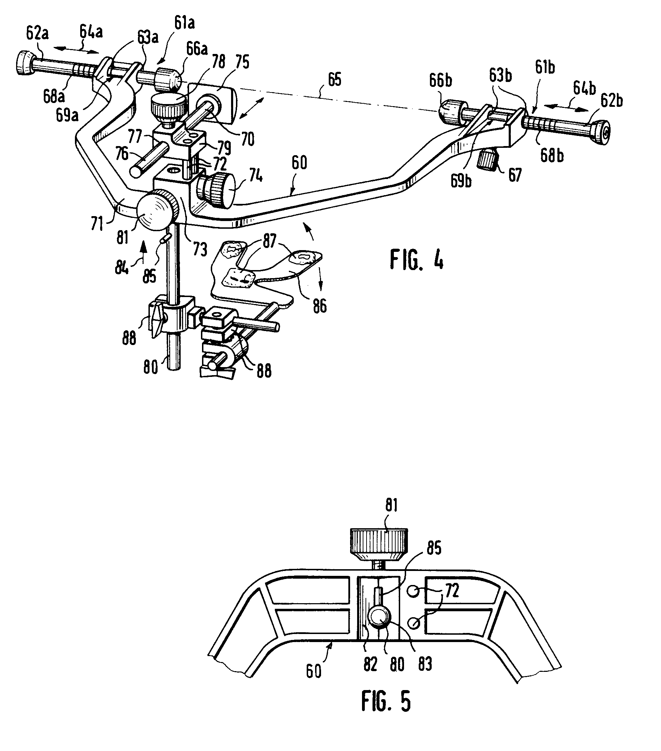

Gemäß Fig. 4 weist der darin dargestellte Gesichtsbogen einen Transfer-Bügel 60 auf, der zur Aufnahme und Übertragung eines Kiefermodells in räumlich schädelgerechter Orientierung in den zuvor erläuterten Artikulator ausgebildet ist. Die Endbereiche 61a, 61b sind jeweils von Tastbolzen 62a, 62b durchsetzt, indem diese in Führungsbohrungen 63a, 63b verschiebbar gelagert sind. Diese Führungsbohrungen 63a, 63b sind zueinander derart symmetrisch ausgerichtet, daß die beiden Tastbolzen 62a, 62b bzw. deren jeweilige Schiebebewegungen 64a bzw. 64b in einer gemeinsamen Flucht 65 liegen. Um am mensch- lichen Schädel die Referenzpunkte für dessen Kiefergelenk- Scharnierachse zu lokalisieren, werden die Tastbolzen 62a, 62b mit ihren Polsterköpfen 66a, 66b - beispielsweise aus Kunststoff - in die Gehörgänge des Patienten teilweise eingeschoben und in dieser Stellung mittels Rändel-schrauben 67 fixiert. Dabei wird darauf geachtet, daß die Endbereiche 61a, 61b des Transferbügels 60 jeweils gleichen Abstand zu den Gesichtsseiten bzw. Gehörgängen des Patienten haben. Hierzu sind die Tastbolzen 62a, 62b jeweils als Träger einer farbigen Ringkodierung 68a, 68b ausgebildet. Zur Einstellung des jeweils gleichen Abstands zu den Patienten-Gehörgängen werden die Ringkodierungen 68a, 68b an den jeweils zugehörigen Justiermarken 69a, 69b vorbeibewegt oder gegebenenfalls diesen gegenüber fixiert. Die Justierung kann mit Hilfe der Farbkodierung so erfolgen, daß die Polsterköpfe 66a, 66b von den Bügelenden 61a, 61b mit jeweils gleicher Entfernung zu den Gehörgängen vorspringen, so daß eine Symmetrie bezüglich der Kiefer-Medianebene erzielt ist.

Ferner wird beim Anlegen des Gesichtsbogens gemäß Fig. 4 die Glabella des Patienten einbezogen, was mittels eines Stützvorsprungs 70 erfolgt. Dieser ist auf der Oberseite des Transferbügels 60 in dessen Mittelabschnitt 71 senkrecht zur Bügelebene linear geführt. Die Führung besteht aus zwei parallelen Einsteckstangen 72, die in eine zentral liegende Erhöhung 73 einsteckbar und mittels einer Rändelschraube 74 feststellbar sind. Eine weitere Führung für den Glabella-Stützvorsprung 70 ist parallel und im Abstand zur vom Transferbügel 60 aufgespannten Ebene vorgesehen. Diese ist mittels eines ein Glabella-Polster 75 tragenden Stieles 76 realisiert, der in einer Bohrung 77 hin und her bewegbar und mittels einer Rändelschraube 78 darin feststellbar geführt ist. Der Abstand der Führungsbohrung 77 zum Bügel 60 läßt sich durch Verschieben der beiden Einsteckstangen 72 und deren anschließendes Fixieren mittels der Rändelschraube 74 anpassen. Die beiden Einsteckstangen 72 dienen dazu, die Ausrichtung der Führungsbohrung 77 zur Glabella hin zu stabilisieren. Sie tragen deshalb einen Aufsatz 79, der von der Führungsbohrung 77 durchsetzt ist.

Unterhalb der mittig angeordneten Erhöhung 73 des Bügels 70 ist eine Führungssäule 80 verschiebbar und mittels einer Rändelschraube 81 feststellbar aufgenommen. Wie aus der Draufsicht auf die Unterseite des Transferbügels 60 gemäß Fig 5 ersichtlich, ist eine Zentriernut 82 mit etwa V-förmigem Querschnitt von einer Führungsbohrung 83 quer durchsetzt.

Die Führungsbohrung 83 ist derart ausgerichtet, daß sie eine Verschiebung 84 der Führungssäule senkrecht zur vom Transferbügel 60 aufgespannten Ebene ermöglicht. Als Anschlagelement dient ein an der Führungssäule 80 angebrachter und davon senkrecht vorspringender Justier- dorn 85, der beim Einschieben der Führungssäule 80 in die Führungsbohrung 83 in der Zentriernut 82 gegebenenfalls aufliegt. Der Justierdorn 85 dient gleichzeitig dazu, die Drehstellung der Führungssäule 80 im Transferbügel 60 festzulegen. Sodann wird eine im (nicht gezeichneten) Patientenmund befindliche Bißgabel 86 (vgl. Fig. 4), auf der sich Wachsregistrate 87 mit Impressionen des Patienten befinden, an der Führungssäule 80 mittels Klemmelementen 88 befestigt. Die Befestigung erfolgt, während der Transferbügel 60 über seine Tastbolzen 62a, 62b ent- sprechend der Scharnierachse des Kiefergelenks des Patienten angelegt ist.

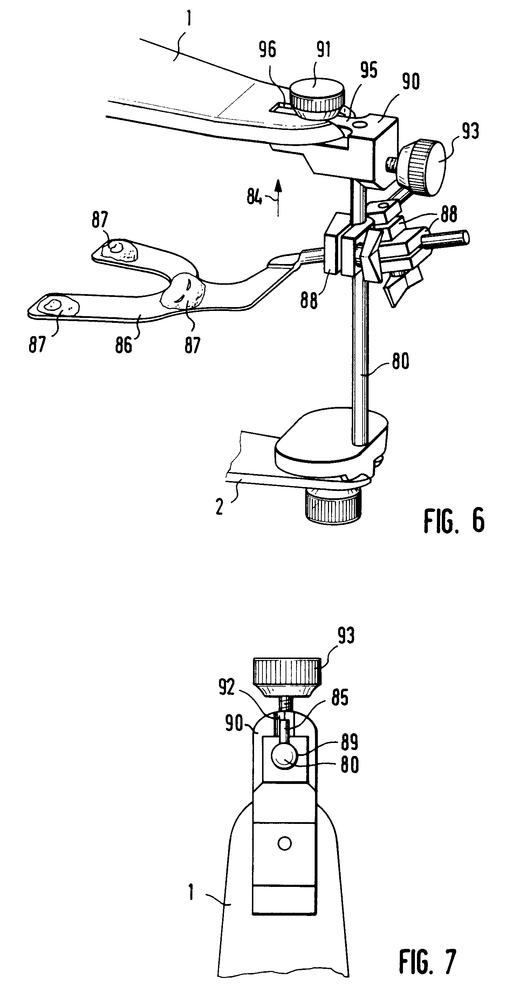

Gemäß Fig.6 ist dann die Führungssäule 80 vom Transferbügel 60 gelöst und in eine weitere Führungsbohrung 89 (vgl. Fig. 7) zunächst nur teilweise eingeschoben, die ein Adapterteil 90 durchsetzt, das am Artikulator-Oberteil 1 mittels einer Rändelschraube 91 montiert ist. Mit zunehmender Einschiebbewegung 84 der Führungssäule 80 in die Adapter-Führungsbohrung 89 gerät der Justierdorn 85 in Anlage auf den Scheitelgrund der querschnittlich V-förmigen Zentriernut 92 an der Unterseite des Adapterteils 90, wie in Fig.7 dargestellt. Diese Stellung kann mittels einer in die Führungsbohrung 89 einwirkenden Rändelschraube 93 fixiert werden. Dabei wird für die Führungssäule 80 dieselbe Drehstellung herbeigeführt, wie sie zuvor im Transferbügel 60 des Gesichtsbogens gemäß Fig. 5 bestand.

Ist zudem die mittels der Klemmelemente 88 herbeigeführte, räumlich schädelgerechte Fixierung der Bißgabel 86 nicht verändert worden, hat die Bißgabel 86 im Artikulator eine räumliche Orientierung zur Scharnierachse 23 zweier Kugelgelenkköpfe 20 (vgl. auch WO 92/02192), die sehr genau den am Patienten mittels Tastbolzen 62a, 62b, Glabella-Stützvorsprung 70 und Bißgabel 86 mit Wachsregistraten 87 vermessenen Verhältnissen entspricht.

Der Adapter 90 ist als dem konventionellen Artikulator-Oberteil 1 kompatibles Teil ausgeführt, das gegen das Halterungsteil 94 zur Verstellung der Höhe des Stütz- stiftes 5 (vgl. Fig. 1) ausgetauscht werden kann. Zu diesem Zweck ist das Adapterteil 90 mit einem erhabenenen, länglichen Rückensteg 95 versehen, der in den Vorder- schlitz 96 des Artikulator-Oberteils 1 eingeschoben werden kann (vgl. Fig. 6 und Fig. 1).

## Patentansprüche

1. Gesichtsbogen zur Aufnahme und Übertragung eines Kiefermodells in räumlich schädelgerechter Orientierung in einen Kiefergelenk-Artikulator, mit einem das Gesicht umgebenden Transfer-Bügel (60) und einer daran lösbar befestigten Führungssäule (80) zum Tragen einer verstellbaren Bißgabel (86), dadurch gekennzeichnet, daß der Bügel (60) an seiner Ober- oder Unterseite (1,2) eine längliche Zentriervertiefung, und die Führungssäule (80) einen Justiervorsprung (85) aufweisen, der zum formschlüssigen Einrücken in die Zentriervertiefung (82) ausgebildet ist.

2. Gesichtsbogen nach Anspruch 1, dadurch gekennzeichnet, daß der Justiervorsprung (85) als senkrecht vorspringender Dorn ausgeführt ist.

3. Gesichtsbogen nach Anspruch 1 oder 2, dadurch gekennzeichnet, daß die Zentriervertiefung (82) als im Querschnitt V-förmige Nut ausgeführt ist.

4. Gesichtsbogen nach einem der vorangehenden Ansprüche, dadurch gekennzeichnet, daß die Zentriervertiefung (82) etwa senkrecht zur Kiefer-Frontalebene und/oder Kiefergelenk-Scharnierachse (23) verläuft.

5. Gesichtsbogen nach einem der vorangehenden Ansprüche, dadurch gekennzeichnet, daß die Zentriervertiefung (82) etwa in Richtung der Kiefer-Medianebene (44) verläuft und/oder in der mittleren Querebene des Transferbügels liegt.

6. Gesichtsbogen nach einem der vorangehenden Ansprüche, gekennzeichnet durch eine zum Einschieben und Feststellen der Führungssäule (80) ausgebildete Bohrung (83), wobei im Bereich von deren Öffnungskante die Zentriervertiefung (82) radial oder senkrecht verlaufend angeordnet ist.

7. Gesichtsbogen nach einem der vorangehenden Ansprüche, wobei die Endbereiche (61a,61b) des Transferbügels (60) Taster (62a,62b) für die Kiefer-Scharnierachse (23) zum dortigen Anlegen des Bügels (20) aufweisen, dadurch gekennzeichnet, daß die Taster (62a,62b) in Richtung der Scharnierachse (23) beweg- und feststellbar (64) geführt sind.

8. Gesichtsbogen nach Anspruch 7, dadurch gekennzeichnet, daß die Taster als Träger zueinander bezüglich einer quer zur Scharnierachse (23) verlaufenden Mittelebene beziehungsweise der Kiefer-Medianebene (44) symmetrischer Codemarkierungen ausgebildet und an einer auf dem Bügel (60) ortsfesten Justiermarkierung (69a,69b) vorbeibewegbar sind.

9. Gesichtsbogen nach Anspruch 7 oder 8, dadurch gekennzeichnet, daß die Taster (62a,62b) als Bolzen oder Stifte ausgeführt sind, die die Bügelenden (61a,61b) in Richtung der Scharnierachse (23) durchsetzen und von farbig codierten Ringen (68a,68b) umgeben sind.

10. Gesichtsbogen nach einem der vorangehenden Ansprüche, wobei die Endbereiche (61a,61b) des Transferbügels (60) Taster (62a,62b) für die Kiefer-Scharnierachse (23) zum dortigen Anlegen des Bügels (20) aufweisen, gekennzeichnet durch einen in einem mittleren Abschnitt (71) des Bügels (60) angeordneten Stütz-Vorsprung (70) zur Anlage an der Glabella.

11. Gesichtsbogen nach Anspruch 10, dadurch gekennzeichnet, daß der Vorsprung (70) in Richtung zur Glabella und/oder schräg oder senkrecht zur vom Bügel (60) aufgespannten Ebene feststellbar geführt ist.

12. Adapter für einen Kiefer-Artikulator zu dessen Verbindung mit der Bißgabel-Führungssäule (80) eines Gesichtsbogens nach einem der vorangehenden Ansprüche, gekennzeichnet durch eine Zentriervertiefung (92) zur formschlüssigen Aufnahme des Justiervorsprungs (85) der Führungssäule (80).

13. Adapter nach Anspruch 12, gekennzeichnet durch eine lösbare Befestigung am Ober- oder Unterteil (1,2) des Artikulators.

14. Adapter nach einem der vorangehenden Ansprüche, gekennzeichnet durch eine zum Einschieben und Feststellen der Führungssäule (80) ausgebildete Bohrung (89), wobei im Bereich von deren Öffnungskante die Zentriervertiefung (92) radial oder senkrecht verlaufend angeordnet ist.

## Claims

1. A face bow for receiving and transferring a jaw model in spatially correct skull orientation in a jaw joint articulator, with a transfer bracket (60) enclosing the face and a guide column (80) releasably secured to the transfer bracket (60) for supporting an adjustable mouthpiece (86), characterised in that the bracket (60) comprises an elongated centring recess on its upper or lower side (1, 2), and the guide column (80) comprises an adjustment projection (85), which is constructed for positive-locking engagement in the centring recess (82).

2. A face bow according to claim 1, characterised in that the adjustment projection (85) is constructed as a perpendicularly projecting pin.

3. A face bow according to claim 1 or 2, characterised in that the centring recess (82) is constructed as a groove having a V-shaped cross section.

4. A face bow according to one of the preceding claims, characterised in that the centring recess (82) extends approximately perpendicular to the jaw frontal plane and/or the jaw joint hinge axis (23).

5. A face bow according to one of the preceding claims, characterised in that the centring recess (82) extends approximately in the direction of the jaw median plane (44) and/or lies in the centre transverse plane of the transfer bracket.

6. A face bow according to one of the preceding claims, characterised by a bore (83) constructed for the introduction and fixing of the guide column (80), the centring recess (82) being arranged so as to extend radially or perpendicularly in the region of the opening edge of the bore (83).

7. A face bow according to one of the preceding claims, the end regions (61a, 61b) of the transfer bracket (60) comprising callipers (62a, 62b) for the jaw hinge axis (23) for fitting the bracket (20) at this point, characterised in that the callipers (62a, 62b) are guided so as to be displaceable and fixable in the direction of the hinge axis (23).

8. A face bow according to claim 7, characterised in that the callipers are constructed as supports of code markings which are symmetrical to one another in relation to a centre plane extending transversely to the hinge axis (23) or in relation to the jaw median plane (44) and can be moved past a fixed adjustment marking on the bracket (60).

9. A face bow according to claim 7 or 8, characterised in that the callipers (62a, 62b) are constructed as bolts or pins, which penetrate the bracket ends (61a, 61b) in the direction of the hinge axis (23) and are enclosed by colour-coded rings (68a, 68b).

10. A face bow according to one of the preceding claims, the end regions (61a, 61b) of the transfer bracket (60) comprising callipers (62a, 62b) for the jaw hinge axis (23) for fitting the bracket (20) at this point, characterised by a support projection (70) arranged in a central section (71) of the bracket (60) for resting against the glabella.

11. A face bow according to claim 10, characterised in that the projection (70) is guided so as to be fixable in the direction of the glabella and/or at an angle to or perpendicular to the plane defined by the bracket (60).

12. An adapter for a jaw articulator for connecting the jaw articulator to the mouthpiece guide column (80) of a face bow according to one of the preceding claims, characterised by a centring recess (92) for receiving the adjustment projection (85) of the guide column (80) in a positive-locking manner.

13. An adapter according to claim 12, characterised by releasable securing to the upper or lower part (1, 2) of the articulator.

14. An adapter according to one of the preceding claims, characterised by a bore (89) constructed for the introduction and fixing of the guide column (80), the centring recess (92) being arranged so as to extend radially or perpendicular in the region of the opening edge of the bore (89).

## Revendications

1. Arc facial destiné à reproduire et transférer un modèle de mâchoires, selon une orientation spatiale céphalique correcte, dans un articulateur d'articulation de mâchoires, et comportant un étrier de transfert (60) entourant le visage, ainsi qu'une tige de guidage (80) fixée, de manière démontable, à l'étrier de transfert et destinée à porter une fourchette buccale réglable (86), caractérisé en ce que l'étrier (60) présente, sur son côté supérieur ou inférieur (1, 2), un creux de centrage allongé, et la tige de guidage (80) présente une protubérance d'ajustement (85), qui est conçue pour venir s'engager, par complémentarité de formes, dans le creux de centrage (82).

2. Arc facial selon la revendication 1, caractérisé en ce que la protubérance d'ajustement (85) est réalisée sous la forme d'un tourillon faisant saillie perpendiculairement.

3. Arc facial selon la revendication 1 ou 2, caractérisé en ce que le creux de centrage (82) est réalisé sous la forme d'une rainure de section transversale en forme de V.

4. Arc facial selon l'une des revendications précédentes, caractérisé en ce que le creux de centrage (82) s'étend à peu prés perpendiculairement au plan frontal des mâchoires et/ou à l'axe de charnière (23) de l'articulation des mâchoires.

5. Arc facial selon l'une des revendications précédentes, caractérisé en ce que le creux de centrage (82) s'étend à peu prés dans la direction du plan médian (44) des mâchoires et/ou se situe dans le plan transversal central de l'étrier de transfert.

6. Arc facial selon l'une des revendications précédentes, caractérisé par un alésage (83) conçu pour l'introduction et l'immobilisation de la tige de guidage (80), le creux de centrage (82) étant disposé dans la zone du bord d'ouverture de cet alésage, en s'étendant radialement ou perpendiculairement à celui-ci.

7. Arc facial selon l'une des revendications précédentes, dont les parties d'extrémité (61a, 61b) de l'étrier de transfert (60) comportent des palpeurs (62a, 62b) pour l'axe de charnière (23) des mâchoires en vue de l'application de l'étrier (20) en cet endroit, caractérisé en ce que les palpeurs (62a, 62b) sont guidés de manière à pouvoir être déplacés et immobilisés (64) dans la direction de l'axe de charnière (23).

8. Arc facial selon la revendication 7, caractérisé en ce que les palpeurs sont réalisés sous la forme de supports de repères codés symétriques les uns des autres par rapport à un plan central s'étendant transversalement à l'axe de charnière (23) ou par rapport au plan médian (44) des mâchoires, et peuvent être déplacés devant une repère d'ajustement (69a, 69b) en position fixe sur l'étrier (60).

9. Arc facial selon la revendication 7 ou 8, caractérisé en ce que les palpeurs (62a, 62b) sont réalisés sous la forme de chevilles ou goupilles, qui traversent les extrémités (61a, 61b) de l'étrier dans la direction de l'axe de charnière (23) et qui sont entourées d'anneaux codés de couleurs (68a, 68b).

10. Arc facial selon l'une des revendications précédentes, dont les parties d'extrémité (61a, 61b) de l'étrier de transfert (60) comportent des palpeurs (62a, 62b) pour l'axe de charnière (23) des mâchoires en vue de l'application de l'étrier (20) en cet endroit, caractérisé par une protubérance d'appui (70) disposée sur un tronçon central (71) de l'étrier (60) et destinée à venir s'appliquer sur la glabelle.

11. Arc facial selon la revendication 10, caractérisé en ce que la protubérance (70) est guidée, en pouvant être immobilisée, en direction de la glabelle et/ou obliquement par rapport au plan sous-tendu par l'étrier (60) ou perpendiculairement à celui-ci.

12. Adaptateur pour un articulateur de mâchoires en vue de la liaison de celui-ci à la tige de guidage (80) de la fourchette buccale d'un arc facial selon l'une des revendications précédentes, caractérisé par un creux de centrage (92) destiné à recevoir, par complémentarité de formes, la protubérance d'ajustement (85) de la tige de guidage (80).

13. Adaptateur selon la revendication 12, caractérisé par une fixation démontable sur la partie supérieure ou inférieure (1, 2) de l'articulateur.

14. Adaptateur selon l'une des revendications précédentes, caractérisé par un alésage (89) conçu pour l'introduction et l'immobilisation de la tige de guidage (80), le creux de centrage (92) étant disposé dans la zone du bord d'ouverture de cet alésage, en s'étendant radialement ou perpendiculairement à celui-ci.
